# EUROPEAN PATENT APPLICATION

(11) **EP 4 517 911 A1**
(43) Date of publication of application: **05.03.2025**
(21) Application number: 23907863.7
(22) Date of filing: 22.12.2023
(51) Int. Cl.: H01M 10/0587, H01M 50/533, H01M 10/052, H01M 10/0569, H01M 10/0567, H01M 4/36, H01M 4/48, H01M 4/587, H01M 10/0568

(54) **LITHIUM SECONDARY BATTERY**

(30) Priority: 23.12.2022 KR 20220183661; 23.12.2022 KR 20220183669; 21.12.2023 KR 20230189003
(71) Applicant: LG Energy Solution, Ltd., Seoul 07335 (KR)
(72) Inventor: KO, Hyeon Min, Daejeon 34122 (KR); SHIN, Won Kyung, Daejeon 34122 (KR); TAKEUCHI, Takashi, Daejeon 34122 (KR); CHOI, Jin Yi, Daejeon 34122 (KR); PARK, Ji Young, Daejeon 34122 (KR)
(74) Representative: Goddar, Heinz J.
(86) International application number: PCT/KR2023/021406
(87) International publication number: WO 2024/136580

(57) **Abstract**

The present invention provides a lithium secondary battery including: an electrode assembly in which a positive electrode plate, a negative electrode plate, and a separator interposed between the positive electrode plate and the negative electrode plate are wound in one direction; a battery can accommodating the electrode assembly; an electrolyte injected into the battery can; and a sealing body sealing an open end of the battery can, wherein each of the positive electrode plate and the negative electrode plate includes a non-coated portion in which an active material layer is not formed, and at least a part of the non-coated portion of the positive electrode plate or the negative electrode plate defines an electrode tab, and wherein a volume occupied by the electrolyte is 101% by volume or more and 119% or less based on the total pore volume of the positive electrode plate, the negative electrode plate, and the separator.

## Description

### [Technical Field]

### CROSS-REFERENCE TO RELATED APPLICATION

This application claims the benefits of priority to Korean Patent Application No. 10-2022-0183661 filed on December 23, 2022 and Korean Patent Application No. 10-2022-0183669 filed on December 23, 2022, the disclosures of which are incorporated herein by reference in their entirety.

### [Technical Field]

The present invention relates to a lithium secondary battery.

### [Background Art]

With the development of technology for electric vehicles, portable electronic devices, and the like, the demand for lithium secondary batteries as an energy source is rapidly increasing.

The lithium secondary batteries can be classified into cylindrical, prismatic, and pouch-type batteries according to the battery case type. Among them, the cylindrical battery has a form in which a jelly-roll type electrode assembly is accommodated in a cylindrical battery can and then sealed by covering the top of the battery can with a cap plate, wherein the jelly-roll type electrode assembly is manufactured by sequentially stacking a sheet-shaped positive electrode plate, a separator, and a negative electrode plate and then winding them in one direction. The positive electrode plate and the negative electrode plate are provided with a positive electrode tab and a negative electrode tab having a strip shape, respectively, wherein the positive electrode tab and the negative electrode tab are connected to an electrode terminal to be electrically connected to an external power source. For reference, the positive electrode terminal is a cap plate, and the negative electrode terminal is a battery can. However, in the case of a conventional cylindrical battery having such a structure, there is a problem in that current is concentrated on the strip-shaped electrode tab, so that resistance is large, a lot of heat is generated, and current collecting efficiency is not good.

Meanwhile, with the recent development of technology for electric vehicles, the demand for a high-capacity battery increases, and thus, a large cylindrical battery having a large volume is required to be developed. In the case of a small cylindrical battery that has been generally used in the prior art, that is, a cylindrical battery having a form factor of 1865 or 2170, resistance or heat generation did not significantly affect battery performance because the capacity was small. However, if the specifications of the conventional small cylindrical battery are applied to a large cylindrical battery as they are, a serious problem may arise in battery safety.

This is because when the size of the battery increases, the amount of heat and gas generated inside the battery also increases, and the temperature and pressure inside the battery rise due to such heat and gas, which may cause the battery to fire or explode. To prevent this, the heat and gas inside the battery must be appropriately discharged to the outside, and to this end, the cross-sectional area of the battery, which is a passage for discharging heat to the outside of the battery, must increase according to the increase in volume. However, since the increase in the cross-sectional area usually does not reach the increase in volume, the amount of heat generated inside the battery increases as the battery becomes larger, thereby increasing the risk of explosion and decreasing the output. Also, when fast charging is performed at a high voltage, a large amount of heat may be generated around the electrode tab for a short time, and thus the battery may be fired.

Therefore, by applying a structure in which non-coated portions of the positive electrode plate and the negative electrode plate serve as the electrode tabs without forming separate electrode tabs (for example, a tab-less structure), it is possible to solve the problem that current is concentrated around the electrode tabs.

However, if such a tap-less structure is applied, the arrangement and structure of the internal space are different from those of a conventional cylindrical lithium secondary battery, so the characteristics are different from those of the conventional cylindrical battery. For example, in the conventional cylindrical lithium secondary battery, as the injection amount increases, the electrolyte may be sufficiently impregnated into the electrode assembly, so that the overall characteristics of the lithium secondary battery tend to increase. However, in the case of a large-capacity lithium secondary battery with a tap-less structure, the internal structure, space arrangement, and impregnation characteristics of the wound electrode assembly are different from those of the conventional cylindrical lithium secondary battery, and as a result, when the amount of electrolyte injected increases, there is a problem that the electrolyte impregnation property rather decreases due to an increase in pressure inside the electrode assembly.

### [Disclosure]

### [Technical Problem]

The present invention is intended to solve the above problems, and aims to provide a high-capacity lithium secondary battery with a tap-less structure and having improved electrolyte impregnation properties and thus excellent overall performance such as output and lifespan characteristics.

### [Technical Solution]

According to one embodiment, the present invention provides a lithium secondary battery including: an electrode assembly in which a positive electrode plate, a negative electrode plate, and a separator interposed between the positive electrode plate and the negative electrode plate are wound in one direction; a battery can accommodating the electrode assembly; an electrolyte injected into the battery can; and a sealing body sealing an open end of the battery can, wherein each of the positive electrode plate and the negative electrode plate includes a non-coated portion in which an active material layer is not formed, and at least a part of the non-coated portion of the positive electrode plate or the negative electrode plate defines an electrode tab, and wherein a volume occupied by the electrolyte is 101% by volume or more and 119% or less based on the total pore volume of the positive electrode plate, the negative electrode plate, and the separator.

### [Advantageous Effects]

The lithium secondary battery according to the present invention may have a structure in which the non-coated portions of the positive electrode plate and the negative electrode plate serve as the electrode tabs without forming separate electrode tabs (for example, a tab-less structure). In the case of a conventional cylindrical battery in which an electrode tab is formed, a large amount of current is concentrated on the electrode tab during charging, and thus, a large amount of heat is generated around the electrode tab. In particular, during rapid charging, this phenomenon becomes severe, and there is a risk of battery ignition or explosion. In comparison, the cylindrical lithium secondary battery with a tab-less structure according to the present invention may have a structure in which a non-coated portion having no active material layer is formed at the ends of the positive and negative electrode plates, and the non-coated portion is connected to the electrode terminal by welding it with a current collector plate having a large cross-sectional area. In the battery with this tab-less structure, the current concentration is less compared to the conventional battery with electrode tabs, whereby heat generation inside the battery can be effectively reduced, and thus the thermal safety of the battery can be improved.

In addition, in the lithium secondary battery according to the present invention, the volume occupied by the electrolyte is adjusted to be 101% by volume or more and 119% or less based on the total pore volume of the positive electrode plate, the negative electrode plate, and the separator, so that the electrolyte can be sufficiently impregnated into the electrode assembly even in a large-capacity cylindrical lithium secondary battery using the tap-less structure, thereby obtaining excellent output characteristics and lifespan characteristics. In particular, the loss of available electrolyte is reduced, making it possible to implement a large-capacity lithium secondary battery with excellent low-temperature lifespan characteristics.

### [Description of Drawings]

FIG. 1 is a cross-sectional view showing a structure of a cylindrical battery with a tap-less structure according to an embodiment of the present invention.
FIG. 2 is a cross-sectional view showing a structure of a cylindrical battery with a tap-less structure according to another embodiment of the present invention.

### [Best Modes of the Invention]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

In the present disclosure, a "primary particle" refers to a particle unit in which a grain boundary does not exist in appearance when observed at a field of view of 5,000 to 20,000 times using a scanning electron microscope. An "average particle diameter of the primary particle" means an arithmetic average value calculated by measuring the particle diameters of the primary particles observed in the scanning electron microscope image.

In the present disclosure, a "secondary particle" refers to a particle formed by agglomerating a plurality of primary particles. In the present disclosure, a secondary particle in which 10 or less primary particles are aggregated will be referred to as a quasi-single particle so as to distinguish it from a conventional secondary particle formed by aggregating tens to hundreds of primary particles.

In the present disclosure, a "D₅₀" refers to a particle size based on 50% of a volume cumulative particle size distribution of a positive electrode active material powder, can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

### Electrolyte

The electrolyte included in the lithium secondary battery of the present invention may be injected in an amount of 101% by volume or more and 119% by volume or less, preferably 101% by volume or more and 115% by volume or less, and most preferably 101% by volume or more and 108% by volume or less, based on the total pore volume of the positive electrode plate, the negative electrode plate, and the separator. In this case, the electrode assembly can be sufficiently impregnated with the electrolyte to obtain an effect of excellent output characteristics and lifespan characteristics. Particularly, when the injection amount is less than the above range, the amount of electrolyte through which lithium ions can move is reduced, thereby deteriorating the output characteristics, and the loss of available electrolyte increases, thereby resulting in a high lithium precipitation rate at a low temperature and thus inferior low-temperature lifespan characteristics. Also, when the injection amount exceeds the above range, the internal pressure increases due to an increase in the amount of electrolyte, and the impregnation property of the electrolyte rather decreases, resulting in inferior output and lifespan characteristics.

The electrolyte used in the lithium secondary battery of the present invention may have a viscosity at 20°C of 3.5 cP or more and 4.2 cP or less, and preferably 3.55 cP or more and 4.15 cP or less. The viscosity can be measured using an Ostwald viscometer. When the viscosity satisfies the above range, the impregnation property of the electrolyte becomes appropriate, and thus, optimal performance can be provided when the range of the injection fraction of the present invention is applied.

The electrolyte used in the lithium secondary battery of the present invention may include a lithium salt, an organic solvent, and an additive.

The lithium salt is used as an electrolyte salt in the lithium secondary battery and as a medium for transferring ions. Typically, the lithium salt may contain, for example, Li⁺ as a cation and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻as an anion.

Specifically, the lithium salt may include any one or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis(fluorosulfonyl)imide; LiFSI), LiN(SO₂CF₂CF₃)₂ (lithium bis(perfluoroethanesulfonyl)imide; LiBETI), and LiN(SO₂CF₃)₂ (lithium bis(trifluomethanesulfonyl) imide; LiTFSI). In addition, any lithium salt commonly used in the electrolytes of lithium secondary batteries may be used without limitation.

The lithium salt may be included in the electrolyte at a concentration of 1.0 M to 1.5 M, preferably 1.1 M to 1.3 M, in order to realize optimal electrolyte impregnation property for a large-capacity cylindrical lithium secondary battery. When the concentration of the lithium salt satisfies the above range, the effect of improving cycle characteristics is sufficient when the lithium secondary battery is stored at high temperatures, and the viscosity of the non-aqueous electrolyte may be appropriate, thereby improving electrolyte impregnation.

The organic solvent may include at least one organic solvent selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is a high-viscosity organic solvent that has a high dielectric constant and thus can easily dissociate the lithium salt in the electrolyte, and as specific examples thereof, may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and particularly, may include ethylene carbonate.

The cyclic carbonate, for example ethylene carbonate, may be included in an amount of 15 to 30% by volume, preferably 15 to 25% by volume, and most preferably 15 to 20% by volume based on the total volume of the organic solvent. When the ethylene carbonate is included in the above range, an optimized electrolyte can be provided in terms of viscosity and performance.

In addition, the linear carbonate-based organic solvent is an organic solvent having a low viscosity and a low dielectric constant, and as representative examples thereof, may include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and specifically, ethyl methyl carbonate (EMC).

The linear carbonate, for example ethyl methyl carbonate, may be included in an amount of 15 to 30% by volume, preferably 15 to 25% by volume, and most preferably 15 to 20% by volume based on the total volume of the organic solvent. When the ethyl methyl carbonate is included in the above range, an optimized electrolyte can be provided in terms of viscosity and performance.

It is preferable that the organic solvent contained in the electrolyte of the present invention includes ethylene carbonate (EC) and ethyl methyl carbonate (EMC), and contains ethylene carbonate (EC) and ethyl methyl carbonate (EMC) in an amount of 25% by volume or less based on the total volume of the organic solvent. In this case, since the impregnation property of the electrolyte becomes appropriate, the electrolyte can be sufficiently impregnated into the electrode assembly when the range of the injection fraction of the present invention is applied. Therefore, the lithium secondary battery of the present invention can achieve excellent effects in both output characteristics and lifespan characteristics.

The organic solvent may include ethylene carbonate (EC) and ethyl methyl carbonate (EMC) in a volume ratio of about 1:0.25 to about 1:1.15, preferably about 1:0.2 to about 1:1.1.

The organic solvent may further include dimethyl carbonate (DMC).

In addition, in order to produce an electrolyte having a high ion conductivity, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent.

Specific examples of such linear ester-based organic solvents may include at least one organic solvent selected from the group consisting of methyl acetate, ethyl acetate, propyl acetate, methyl propionate, ethyl propionate, propyl propionate, and butyl propionate.

In addition, the cyclic ester-based organic solvent may include at least one organic solvent selected from the group consisting of γ-butyrolactone, γ-valerolactone, γ-caprolactone, σ-valerolactone, and ε-caprolactone.

Meanwhile, the organic solvent may be used by adding, without limitation, an organic solvent commonly used in a non-aqueous electrolyte as needed. For example, at least one organic solvent of an ether-based organic solvent, a glyme-based solvent, and a nitrile-based organic solvent may be further included.

The ether-based solvent may be any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent is a solvent having a higher dielectric constant and a lower surface tension than a linear carbonate-based organic solvent and having less reactivity with metal, and may include at least one selected from the group consisting of dimethoxyethane (glyme, DME), diethoxyethane, diglyme, tri-glyme, and tetra-glyme (TEGDME), but is not limited thereto.

The nitrile-based solvent may be at least one selected from the group consisting of acetonitrile, propionitrile, butyronitrile, valeronitrile, caprylonitrile, heptonitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The non-aqueous electrolyte of the present invention may include an electrolyte additive in order to prevent the non-aqueous electrolyte from decomposing in a high-power environment to cause negative electrode collapse, or in order to further improve low-temperature high-rate discharge characteristics, high-temperature stability, overcharge prevention, and effect of battery expansion inhibition at high temperatures, etc.

The electrolyte additive may include, as representative examples thereof, at least one additive for forming an SEI film selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be a vinylene carbonate (VC) or a vinyl ethylene carbonate.

The cyclic carbonate-based compound may be included in an amount of 0.1 to 3% by weight, preferably 1 to 3% by weight, and most preferably 1.5 to 2.5% by weight, based on the total weight of the electrolyte.

The halogen-substituted carbonate-based compound may be a fluoroethylene carbonate (FEC).

The sultone-based compound may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sultone-based compound may be included in an amount of 0.1 to 2% by weight, preferably 0.1 to 1.5% by weight, and most preferably 0.8 to 1.2% by weight, based on the total weight of the electrolyte.

The sulfate-based compound may be ethylene sulfate (Esa), trimethylene sulfate (TMS), or methyl trimethylene sulfate (MTMS).

The phosphate-based compound may be at least one compound selected from the group consisting of lithium difluoro(bisoxalato) phosphate, lithium difluorophosphate, tris(trimethylsilyl) phosphate, tris(trimethyl silyl) phosphite, tris(2,2,2-trifluoroethyl) phosphate, and tris(2,2,2-trifluoroethyl) phosphite.

The borate-based compound may be tetraphenyl borate, lithium oxalyl difluoroborate (LiODFB), and lithium bisoxalatoborate (LiB(C₂O₄)₂, LiBOB).

The nitrile-based compound may be at least one compound selected from the group consisting of succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylene diamine, and the silane-based compound may include tetravinylsilane.

The lithium salt-based compound is different from the lithium salt included in the non-aqueous electrolyte, and may include lithium difluorophosphate (LiDFP), LiPO₂F₂ or LiBF₄. Among them, the LiPO₂F₂ can play a role in lowering the increased resistance. Specifically, the LiPO₂F₂ is reduced during the initial activation process to form an inorganic film including F and P on the electrode, and such an inorganic film improves the durability of the SEI layer and suppresses further reaction of the electrolyte. For this reason, since the increase in resistance resulting from decomposition of the electrolyte is suppressed, the resistance of the cylindrical lithium secondary battery can be lowered.

The electrolyte may contain LiPO₂F₂ in an amount of 0.01 to 1% by weight, preferably 0.1 to 1% by weight, more preferably 0.2 to 0.8% by weight, based on the total weight of the electrolyte. When the content of LiPO₂F₂ satisfies the above range, an inorganic film containing an appropriate amount of F and P can be formed on the electrode during the initial activation process. For this reason, the durability of the SEI layer can be excellent, the initial resistance can be sufficiently reduced, and the high-temperature storage performance can be excellent.

When a combination of vinylene carbonate (VC), 1,3-propane sultone (PS), and lithium difluorophosphate (LiPO₂F₂) among these other electrolyte additives is additionally included, a more robust SEI film can be formed on the surface of the negative electrode during an initial activation process of the secondary battery, and gas generation that may be generated due to decomposition of the electrolyte at high temperatures can be suppressed, thereby improving high-temperature stability of the secondary battery.

The electrolyte may further include a compound selected from the group consisting of succinonitrile, propargyl-1H-imidazole-1-carboxylate, and methyl-prop-2-ynyl carbonate. The electrolyte may include succinonitrile in an amount of 0.01 to 0.5 wt% based on the total weight of the electrolyte. The electrolyte may include propargyl-1H-imidazole-1-carboxylate in an amount of 0.01 to 1 wt% based on the total weight of the electrolyte. The electrolyte may include methyl-prop-2-ynyl carbonate in an amount of 0.01 to 1 wt% based on the total weight of the electrolyte.

### Electrode Assembly

The electrode assembly is a jelly-roll type electrode assembly having a structure in which a positive electrode plate, a negative electrode plate, and a separator interposed between the positive electrode plate and the negative electrode plate are wound in one direction.

The electrode assembly of the present invention can be manufactured by winding, in one direction, a laminate formed by sequentially stacking a separator, a positive electrode plate, a separator, and a negative electrode plate at least once.

In this case, the positive electrode plate and the negative electrode plate may have a structure in which an active material layer is formed on a long sheet-shaped current collector, and may include a non-coated portion in which an active material layer is not formed on a partial region of the current collector.

When the positive electrode plate and the negative electrode plate including the non-coated portions as described above are used, a battery having a tap-less structure can be implemented in which a separate electrode tab is not provided, and at least a part of the non-coated portions of the positive electrode plate and the negative electrode plate define an electrode tab.

Specifically, the non-coated portion may be formed at one side end of the current collector to be elongated along the winding direction, and a battery having the tab-less structure can be implemented by coupling a current collecting plate to each of the positive electrode plate non-coated portion and the negative electrode plate non-coated portion and connecting the current collecting plate to an electrode terminal.

For example, the battery having a tap-less structure can be manufactured through the following method. First, a separator, a positive electrode plate, a separator, and a negative electrode plate are sequentially stacked so that the non-coated portions of the positive electrode plate and the negative electrode plate are located in opposite directions, and then wound in one direction to manufacture a jelly-roll type electrode assembly. Then, the non-coated portions of the positive electrode plate and the negative electrode plate are bent in a direction of the winding center; a current collecting plate is welded and joined to each of the non-coated portions of the positive electrode plate and the negative electrode plate; and then the current collecting plate is connected to an electrode terminal, thereby manufacturing the battery having a tap-less structure. Meanwhile, the current collecting plate has a larger cross-sectional area compared to a strip-type electrode tab, and resistance is inversely proportional to a cross-sectional area of a passage through which current flows. Therefore, when the secondary battery is formed with the above structure, the cell resistance can be greatly reduced.

The non-coated portions of the positive electrode plate and the negative electrode plate may be processed in the form of a plurality of independently bendable segmental pieces, and at least a part of the plurality of segmental piece may be bent toward a winding center of the electrode assembly.

The segmental piece can be formed by processing the current collector of the positive electrode plate and the negative electrode plate through a metal foil cutting process such as laser notching, ultrasonic cutting, punching, and the like.

When the non-coated portions of the positive electrode plate and the negative electrode plate are processed in the form of a plurality of segmental piece, a stress applied to the non-coated portions during bending is reduced to prevent deformation or damage of the non-coated portions and to improve welding characteristics with the current collecting plate.

The current collecting plate and the non-coated portion are generally joined by welding, and the non-coated portion must be bent as flat as possible by applying a strong pressure to the welded region of the non-coated portion in order to improve the welding characteristics. However, during this bending process, the shape of the non-coated portion may be deformed by being irregularly distorted, and the deformed part may contact the opposite polar electrode to cause an internal short circuit or cause a fine crack in the non-coated portion. However, if the non-coated portions of the positive electrode plate and the negative electrode plate are processed in the form of a plurality of independently bendable segmental pieces, the stress applied to the non-coated portion during bending can be alleviated, thereby minimizing deformation and damage to the non-coated portion.

In addition, when the non-coated portion is processed in the form of the segmental piece as described above, overlapping occurs between the plurality of segmental pieces during bending, whereby the welding strength with the current collecting plate can be increased, and when the latest technology such as laser welding is used, it is possible to prevent a laser from penetrating into the electrode assembly and ablating the separator or the active material. Preferably, at least some of the plurality of bent segmental pieces may be overlapped on the upper and lower ends of the electrode assembly, and the current collecting plate may be coupled on the plurality of bent segmental pieces.

Next, each component of the electrode assembly of the present invention will be described in more detail.

### (1) Positive Electrode Plate

The positive electrode plate may have a structure in which a positive electrode active material layer is formed on one or both surfaces of a long sheet-shaped positive electrode current collector, wherein the positive electrode active material layer may include a positive electrode active material, a conductive material, and a binder.

Specifically, the positive electrode plate can be prepared by applying a positive electrode slurry to one or both surfaces of a long sheet-shaped positive electrode current collector, removing a solvent of the positive electrode slurry through a drying process, and then rolling the same, wherein the positive electrode slurry is prepared by dispersing a positive electrode active material, a conductive material, and a binder in a solvent such as dimethyl sulfoxide (DMSO), isopropyl alcohol, N-methyl pyrrolidone (NMP), acetone, water, etc. Meanwhile, the positive electrode plate including a non-coated portion may be prepared by not applying the positive electrode slurry to some region of the positive electrode current collector, for example, one end of the positive electrode current collector when the positive electrode slurry is applied.

As the positive electrode current collector, various positive electrode current collectors used in the art may be used. For example, the positive electrode current collector may be stainless steel, aluminum, nickel, titanium, fired carbon, or aluminum or stainless steel having a surface treated with carbon, nickel, titanium, silver, etc. The positive electrode current collector may typically have a thickness of 3 to 500 µm, and may have fine irregularities formed on the surface of the positive electrode current collector to increase the adhesion of the positive electrode active material. For example, the positive electrode current collector may be used in various forms such as a film, a sheet, a foil, a net, a porous body, a foam, a non-woven fabric, or the like.

Meanwhile, as the positive electrode active material, any positive electrode active materials generally used in the art may be used.

Preferably, the positive electrode active material may include a lithium nickel-based oxide, and specifically, may include a lithium nickel-based oxide containing 80% by mol or more of Ni based on the total number of moles of transition metals. Preferably, the lithium nickel-based oxide may contain Ni in an amount of 80% by mol or more and less than 100% by mol, 82 % by mol or more and less than 100% by mol, or 83 % by mol or more and less than 100% by mol. When the lithium nickel-based oxide having a high Ni content as described above is used, a high capacity can be realized.

More specifically, the positive electrode active material may include a lithium nickel-based oxide represented by the following Chemical Formula 1:

[Chemical Formula 1] LiₐNi_{b}Co_{c}M¹_{d}M²eO₂

In Chemical Formula 1, M¹ may be Mn, Al, or a combination thereof, and preferably Mn or Mn and Al.

The M² may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The M² element is not necessarily included, but when included in an appropriate amount, it can play a role in promoting grain growth during firing or improving crystal structure stability.

The a represents a molar ratio of lithium in the lithium nickel-based oxide, and may be 0.8≤a≤1.2, 0.85≤a≤1.15, or 0.9≤a≤1.2. When the molar ratio of lithium satisfies the above range, the crystal structure of the lithium nickel-based oxide can be stably formed.

The b represents a molar ratio of nickel among all metals excluding lithium in the lithium nickel-based oxide, and may be 0.8≤b<1, 0.85≤b<1, 0.86≤b<1, or 0.88≤b<1. When the molar ratio of nickel satisfies the above range, a high energy density may be exhibited, thereby implementing a high capacity.

The c represents a molar ratio of cobalt among all metals excluding lithium in the lithium nickel-based oxide, and may be 0<c<0.2, 0<c<0.15, 0<c<0.14, or 0.01≤c≤0.12. When the molar ratio of cobalt satisfies the above range, good resistance characteristics and output characteristics can be realized.

The d represents a molar ratio of M¹ element among all metals excluding lithium in the lithium nickel-based oxide, and may be 0<d<0.2, 0<d<0.15, 0<d<0.14, or 0.01≤d≤0.12. When the molar ratio of the M¹ element satisfies the above range, the structural stability of the positive electrode active material is excellent.

The e represents a molar ratio of M² element among all metals excluding lithium in the lithium nickel-based oxide, and may be 0≤e≤0.1, or 0≤e≤0.05.

Meanwhile, the positive electrode active material according to the present invention may further include, if necessary, a coating layer containing one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si and S on the surface of the lithium nickel-based oxide particles. Preferably, the coating element may be Al, B, Co, or a combination thereof, and most preferably, B.

When the coating layer is present on the surface of the lithium nickel-based oxide particle, the contact between the electrolyte and the lithium composite transition metal oxide can be suppressed by the coating layer, thereby having an effect of reducing transition metal elution or gas generation due to side reactions with the electrolyte.

The positive electrode active material may be included in an amount of 80 to 99% by weight, preferably 85 to 99% by weight, more preferably 90 to 99% by weight, based on the total weight of the positive electrode active material layer.

Meanwhile, the positive electrode active material is not particularly limited in terms of its form, and may be in the form of a secondary particle in which a plurality of primary particles are aggregated, in the form of a single particle formed of one primary particle, or in the form of a combination thereof.

Preferably, the positive electrode active material may include a positive electrode active material composed of a single particle formed of one primary particle and/or a quasi-single particle that is an aggregate of 10 or less primary particles. By using, as the positive electrode active material, a positive electrode active material composed of a single particle formed of one primary particle and/or a quasi-single particle that is an aggregate of 10 or less primary particles, a large cylindrical battery having excellent safety while implementing a high capacity can be obtained.

Conventionally, it has been common to use a spherical secondary particle in which tens to hundreds of primary particles are aggregated as the positive electrode active material for a lithium secondary battery. However, in the case of a positive electrode active material in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particle breakage of the positive electrode active material or cracks inside the particles are generated, the contact area with an electrolyte increases, thereby causing a problem that gas generation due to side reactions with the electrolyte is increased. If gas generation increases inside a cylindrical battery, the pressure inside the battery increases, leading to a risk of battery explosion. In particular, when the volume of the cylindrical battery is increased, the amount of active material inside the battery increases as the volume increases, and thus the amount of gas generated significantly is increased, thereby increasing the risk of firing and/or explosion of the battery.

In contrast, in the case of the positive electrode active material in the form of a single particle formed of one primary particle or a quasi-single particle in which 10 or less primary particles are aggregated, the particle breakage hardly occurs during rolling because the particle strength is higher compared to the conventional secondary particle-type positive electrode active materials in which tens to hundreds of primary particles are aggregated. In addition, in the case of a positive electrode active material in the form of a single particle or quasi-single particle, the number of primary particles constituting the particle is small, whereby there is little change in primary particles due to the volume expansion and contraction thereof during charging and discharging, and thus, the occurrence of cracks inside the particles is also significantly reduced.

Therefore, when the positive electrode active material formed of a single particle or quasi-single particle is used, the amount of gas generated due to particle breakage and internal crack can be significantly reduced, thereby implementing excellent safety even in a large cylindrical battery.

Meanwhile, the positive electrode active material formed of a single particle and/or quasi-single particle is preferably included in an amount of 95% to 100% by weight, preferably 98% to 100% by weight, more preferably 99% to 100% by weight, and even more preferably 100% by weight, based on the weight of the total positive electrode active material included in the positive electrode active material layer. When the content of the single particles and/or quasi-single particles satisfies the above range, sufficient safety can be obtained when applied to a large cylindrical battery.

Meanwhile, the positive electrode active material in the form of a single particle and/or a quasi-single particle according to the present invention may have an average particle diameter D₅₀ of 5 µm or less, 4 µm or less, 3 µm or less, or 2 µm or less, for example, 0.5 µm to 5 µm, preferably 1 µm to 5 µm, and more preferably 2 µm to 5 µm. When the average particle diameter D₅₀ of the positive electrode active material satisfies the above range, an increase in resistance can be minimized.

The positive electrode active materials in the form of a single particle and/or a quasi-single particle has less interface between primary particles, which serves as a diffusion path of lithium ions inside the particles, and thus has lower lithium mobility than the positive electrode active materials in the form of a secondary particle, thereby increasing resistance. This increase in resistance becomes more severe as the particle size increases, and increased resistance has a negative effect on capacity and output characteristics. Therefore, in the present invention, the positive electrode active material in the form of a single particle or quasi-single particle with a small average particle diameter D₅₀ of 5 µm or less is applied to minimize a diffusion distance of lithium ions inside the particle, thereby suppressing the increase in resistance.

The positive electrode active material in the form of a single particle and/or a quasi-single particle may have an average primary particle diameter of 5 µm or less, 4 µm or less, 3 µm or less, or 2 µm or less, for example, 0.5 µm to 5 µm, preferably 1 µm to 5 µm, and more preferably 2 µm to 5 µm. When the average primary particle diameter satisfies the above range, a positive electrode active material in the form of a single particle and/or quasi-single particle with excellent electrochemical properties can be formed. If the average particle diameter of the primary particle is too small, the number of aggregated primary particles forming the positive electrode active material increases, reducing the effect of suppressing the occurrence of particle breakage during rolling. If the average particle diameter of the primary particles is too large, the lithium diffusion path inside the primary particles becomes longer, which may increase resistance and reduce output characteristics.

In the present invention, the positive electrode active material in the form of a single particle and/or a quasi-single particle preferably has a unimodal particle size distribution. Conventionally, in order to improve the electrode density of the positive electrode active material layer, a bimodal positive electrode active material using a mixture of a large-particle-diameter positive electrode active material having a large average particle diameter and a small-particle-diameter positive electrode active material having a small average particle diameter has been widely used. However, in the case of the positive electrode active material in the form of a single particle or a quasi-single particle, as the particle diameter increases, the lithium movement path becomes longer to increase resistance significantly. Therefore, when the large particle diameter particles are mixed and used, the capacity and output characteristics may be deteriorated. Therefore, in the present invention, the increase in resistance can be minimized by using the positive electrode active material with unimodal distribution.

Next, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, carbon fiber, and carbon nanotube; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may usually be included in an amount of 1 to 30% by weight, preferably 1 to 20% by weight, more preferably 1 to 10% by weight, based on the total weight of the positive electrode active material layer.

The binder serves to improve the bonding between the positive electrode active material particles and the adhesion between the positive electrode active material and the positive electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may usually be included in an amount of 1 to 30% by weight, preferably 1 to 20% by weight, more preferably 1 to 10% by weight, based on the total weight of the positive electrode active material layer.

Meanwhile, if necessary, an insulating layer covering a part of the positive electrode active material layer and a part of the non-coated portion may be further formed on the positive electrode plate according to the present invention. The insulating layer may be formed along a direction parallel to the winding direction of the electrode assembly.

The voids of the positive electrode plate are preferably 22 to 24% by volume, preferably 23 to 24% by volume, based on the total volume of the positive electrode plate.

### (2) Negative Electrode Plate

The negative electrode plate may have a structure in which a negative electrode active material layer is formed on one or both surfaces of a long sheet-shaped negative electrode current collector, wherein the negative electrode active material layer may include a negative electrode active material, a conductive material, and a binder.

Specifically, the negative electrode plate can be prepared by applying a negative electrode slurry to one or both surfaces of a long sheet-shaped negative electrode current collector, removing a solvent of the negative electrode slurry through a drying process, and then rolling the same, wherein the negative electrode slurry is prepared by dispersing a negative electrode active material, a conductive material, and a binder in a solvent such as dimethyl sulfoxide (DMSO), isopropyl alcohol, N-methyl pyrrolidone (NMP), acetone, water, etc. Meanwhile, the negative electrode plate including a non-coated portion may be prepared by not applying the negative electrode slurry to some region of the negative electrode current collector, for example, one end of the negative electrode current collector when the negative electrode slurry is applied.

As the negative electrode active material, a compound capable of reversible intercalation and de-intercalation of lithium may be used. Specific examples of the negative electrode active material may include carbonaceous materials such as artificial graphite, natural graphite, graphitized carbon fiber, amorphous carbon; silicon-based materials such as Si, Si-Me alloy (where Me is at least one selected from the group consisting of Al, Sn, Mg, Cu, Fe, Pb, Zn, Mn, Cr, Ti, and Ni), SiOy (where 0<y<2), and Si-C composites; lithium metal thin films; metal materials capable of alloying with lithium, such as Sn and Al; any one or a mixture of two or more thereof may be used.

Preferably, the negative electrode plate according to the present invention may include a silicon-based negative electrode active material. The silicon-based negative electrode active material may be Si, Si-Me alloy (where Me is at least one selected from the group consisting of Al, Sn, Mg, Cu, Fe, Pb, Zn, Mn, Cr, Ti, and Ni), SiOy (here, 0<y<2), Si-C composites, or a combination thereof, and preferably may be SiOy (here, 0<y<2). Since the silicon-based negative electrode active material has a high theoretical capacity, capacity characteristics can be improved when the silicon-based negative electrode active material is included.

Meanwhile, the silicon-based negative electrode active material may be doped with M^{b} metal, wherein the M^{b} metal may be a group 1 metal element, or a group 2 metal element, and specifically, Li, Mg, etc. Specifically, the silicon negative electrode active material may be Si, SiOy (where 0<y<2), Si-C composite, etc. doped with M^{b} metal. In the case of a metal-doped silicon-based negative electrode active material, the active material capacity is somewhat reduced due to the doped element, but has high efficiency, and thus, a high energy density can be realized.

In addition, the silicon-based negative electrode active material may further include a carbon coating layer on the surface of the particle. In this case, the carbon coating amount may be 20% by weight or less, preferably 1 to 20% by weight based on the total weight of the silicon-based negative electrode active material.

In addition, the negative electrode plate may further include a carbon-based negative electrode active material as a negative electrode active material, if necessary. The carbon-based negative electrode active material may be, for example, artificial graphite, natural graphite, graphitized carbon fiber, amorphous carbon, soft carbon, hard carbon, etc., but is not limited thereto.

Meanwhile, when a mixture of the silicon-based negative electrode active material and the carbon-based negative electrode active material is used as the negative electrode active material, a mixing ratio of the silicon-based negative electrode active material and the carbon-based negative electrode active material may be 1:99 to 20:80, preferably 1:99 to 15:85, and more preferably 1:99 to 10:90.

The negative electrode active material may be included in an amount of 80 to 99% by weight, preferably 85 to 99% by weight, more preferably 90 to 99% by weight, based on the total weight of the negative electrode active material layer.

Meanwhile, the negative electrode current collector may be any negative electrode current collector commonly used in the art, and may be, for example, copper, stainless steel, aluminum, nickel, titanium, fired carbon, copper or stainless steel that is surface-treated with carbon, nickel, titanium, silver, or the like, an aluminum-cadmium alloy, or the like. The negative electrode current collector may typically have a thickness of 3 to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The conductive material is used to impart conductivity to the negative electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, carbon fiber, and carbon nanotube; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may usually be included in an amount of 1 to 30% by weight, preferably 1 to 20% by weight, more preferably 1 to 10% by weight, based on the total weight of the negative electrode active material layer.

The binder serves to improve the bonding between the negative electrode active material particles and the adhesion between the negative electrode active material and the negative electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may usually be included in an amount of 1 to 30% by weight, preferably 1 to 20% by weight, more preferably 1 to 10% by weight, based on the total weight of the negative electrode active material layer.

The voids of the negative electrode plate are preferably 22 to 24% by volume, preferably 23 to 24% by volume, based on the total volume of the negative electrode plate.

### (3) Separator

The separator is to separate the negative electrode and the positive electrode and to provide a passage for lithium ions to move, and any separator may be used without particular limitation as long as it is generally used as the separator in the lithium secondary battery. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used as the separator. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used.

The voids of the separator are preferably 46 to 47% by volume, preferably 47 to 48% by volume, based on the total volume of the separator.

### Cylindrical Lithium Secondary Battery

Next, a cylindrical lithium secondary battery according to the present invention will be described.

The cylindrical lithium secondary battery according to the present invention may be a large-capacity cylindrical secondary battery with a capacity of 25 Ah or more.

The cylindrical lithium secondary battery according to the present invention may be a large cylindrical battery having a form factor ratio (defined as a diameter of the cylindrical battery divided by its height, that is, a ratio of a diameter (Φ) to a height (H)) of 0.4 or more. Here, the form factor refers to a value representing the diameter and height of the cylindrical battery.

The cylindrical battery according to the present invention may be, for example, a 46110 cell (diameter of 46 mm, height of 110 mm, form factor ratio of 0.418), a 4875 cell (diameter of 48 mm, height of 75 mm, form factor ratio of 0.640), a 48110 cell (diameter of 48 mm, height of 110 mm, form factor ratio of 0.436), a 4880 cell (diameter of 48 mm, height of 80 mm, form factor ratio of 0.600), a 4680 cell (diameter of 46 mm, height of 80 mm, form factor ratio of 0.575), a 4695 cell (diameter of 46 mm, height of 95 mm, form factor ratio of 0.484). In the figure representing the form factor, the first two numbers represent the diameter of the cell, and the next two or three numbers represent the height of the cell.

The cylindrical lithium secondary battery according to the present invention can significantly reduce the amount of gas generated compared to the prior art, and thus, can implement excellent safety even in a large cylindrical battery having a form factor ratio of 0.4 or more.

Meanwhile, the cylindrical battery according to the present invention is a battery having a tab-less structure that does not include an electrode tab.

For example, the battery having the tab-less structure may have a structure in which each of the positive electrode plate and the negative electrode plate includes a non-coated portion where an active material layer is not formed, the positive and negative electrode non-coated portions are located at the top and bottom of the electrode assembly, respectively, a current collecting plate is coupled to the non-coated portion of the positive electrode plate and the non-coated portion of the negative electrode plate, and the current collecting plate is connected to an electrode terminal.

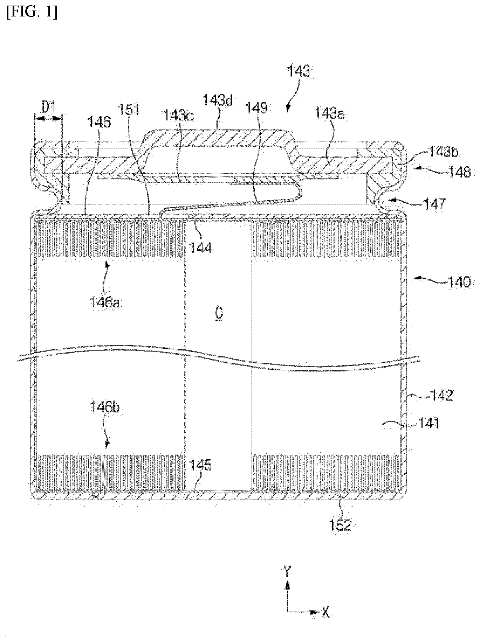

FIG. 1 shows a cross-sectional view of a cylindrical battery with the tap-less structure according to an embodiment of the present invention. Hereinafter, a cylindrical battery according to an embodiment of the present invention will be described with reference to FIG. 1. However, FIG. 1 illustrates only one embodiment of the present invention, and the structure of the cylindrical battery according to the present invention is not limited to the range disclosed in FIG. 1.

A cylindrical battery 140 according to an embodiment of the present invention includes the jelly-roll type electrode assembly 141 described above, a battery can 142 in which the electrode assembly 141 is accommodated, and a sealing body 143 sealing an open end of the battery can 142.

In this case, each of the positive electrode plate and the negative electrode plate of the electrode assembly may include a non-coated portion in which an active material layer is not formed, and may be stacked and wound such that the positive electrode non-coated portion and the negative electrode non-coated portion are positioned at the top and bottom of the electrode assembly, respectively. Since the electrode assembly has been described above, only the remaining components except for the electrode assembly will be described below.

The battery can 142 is a cylindrical container with an opening formed at the top, and is made of a conductive metal material such as aluminum or steel. The battery can accommodate the electrode assembly 141 in the inner space through the top opening, and also accommodates an electrolyte (not shown).

### Battery Can

The battery can 142 is electrically connected to the non-coated portion 146b of the negative electrode plate, and functions as a negative electrode terminal which contacts an external power source to transfer a current applied from the external power source to the negative electrode plate.

If necessary, a beading part 147 and a crimping part 148 may be provided on the top of the battery can 142. The beading part 147 can be formed by press-fitting a circumference of an outer circumferential surface of the battery can 142 to a distance of D1. The beading part 147 prevents the electrode assembly 141 accommodated in the battery can 142 from escaping through the top opening of the battery can 142, and may function as a support on which the sealing body 143 is seated.

The crimping part 148 may be formed on the upper part of the beading part 147, and has an extended and bent shape to surround an outer peripheral surface of the cap plate 143a and a portion of the upper surface of the cap plate 143a disposed on the beading part 147.

Next, the sealing body 143 is for sealing the open end of the battery can 142, may include a cap plate 143a, a first gasket 143b that provides airtightness between the cap plate 143a and the battery can 142 and has insulating properties, and may further include a connection plate 143c electrically and mechanically coupled to the cap plate 143a, if necessary. The cap plate 143a may be pressed on the beading part 147 formed in the battery can 142, and fixed by the crimping part 148.

The cap plate 143a is a component made of a conductive metal material and covers the upper opening of the battery can 142. The cap plate 143a is electrically connected to the positive electrode plate of the electrode assembly 141, and is electrically insulated from the battery can 142 through the first gasket 143b. Accordingly, the cap plate 143a can function as a positive electrode terminal of the cylindrical secondary battery. The cap plate 143a may include a protrusion 143d formed to protrude upward from its center (C), wherein the protrusion 143d can contact an external power source to allow current to be applied from the external power source.

A first gasket 143b may be interposed between the cap plate 143a and the crimping part 148 to ensure airtightness of the battery can 142 and electrical insulation between the battery can 142 and the cap plate 143a.

Meanwhile, the cylindrical battery 140 according to the present invention may further include current collecting plates 144 and 145, if necessary. The current collecting plates are coupled to the non-coated portion 146a of the positive electrode plate and the non-coated portion 146b of the negative electrode plate, and is connected to the electrode terminals (i.e., positive electrode terminal and negative electrode terminal).

Specifically, the cylindrical battery 140 according to the present invention may include a first current collecting plate 144 coupled to an upper part of the electrode assembly 141 and a second current collecting plate 145 coupled to a lower part of the electrode assembly 141.

It may further include a first current collecting plate 144 and/or a second current collecting plate 145.

The first current collecting plate 144 is coupled to the upper part of the electrode assembly 141. The first current collecting plate 144 is made of a conductive metal material such as aluminum, copper, nickel, etc., and is electrically connected to the non-coated portion 146a of the positive electrode plate. A lead 149 may be connected to the first current collecting plate 144. The lead 149 may extend upward from the electrode assembly 141 and be coupled to the connection plate 143c, or may be directly coupled to the lower surface of the cap plate 143a. The lead 149 and the other parts may be coupled through welding. Preferably, the first current collecting plate 144 may be integrally formed with the lead 149. In this case, the lead 149 may have a long plate shape extending outward from the center of the first current collecting plate 144.

Meanwhile, the first current collecting plate 144 is coupled to the end of the non-coated portion 146a of the positive electrode plate, and the coupling may be performed by, for example, laser welding, resistance welding, ultrasonic welding, soldering, or the like.

The second current collecting plate 145 is coupled to the lower part of the electrode assembly 141. The second current collecting plate 145 is made of a conductive metal material such as aluminum, copper, nickel, etc., and is electrically connected to the non-coated portion 146b of the negative electrode plate. One surface of the second current collecting plate 145 may be coupled to the non-coated portion 146b of the negative electrode plate, and the opposite surface may be coupled to the inner bottom surface of the battery can 142. In this case, the coupling may be performed by laser welding, resistance welding, ultrasonic welding, soldering, or the like.

Meanwhile, the cylindrical battery 140 according to the present invention may further include an insulator 146, if necessary. The insulator 146 may be disposed to cover the upper surface of the first current collecting plate 144. By covering the first current collecting plate 144 with the insulator 146, it is possible to prevent direct contact between the first current collecting plate 144 and the inner peripheral surface of the battery can 142.

The insulator 146 has a lead hole 151 through which a lead 149 extending upward from the first current collecting plate 144 can be withdrawn. The lead 149 is withdrawn upward through the lead hole 151 and coupled to the lower surface of the connection plate 143c or the lower surface of the cap plate 143a.

The insulator 146 may be made of an insulating polymer resin, such as polyethylene, polypropylene, polyimide, or polybutylene terephthalate.

Meanwhile, the cylindrical battery 140 according to the present invention may further include a venting part 152 formed on the lower surface of the battery can 142, if necessary. The venting part 152 corresponds to a region of the lower surface of the battery can 142 having a thinner thickness compared to the surrounding region. Since the venting part 152 is thin, it is structurally weak compared to the surrounding region. Therefore, when the pressure inside the cylindrical battery 140 increases above a certain level, the venting part 152 bursts, and the gas inside the battery can 142 is discharged to the outside, thereby preventing the battery from exploding.

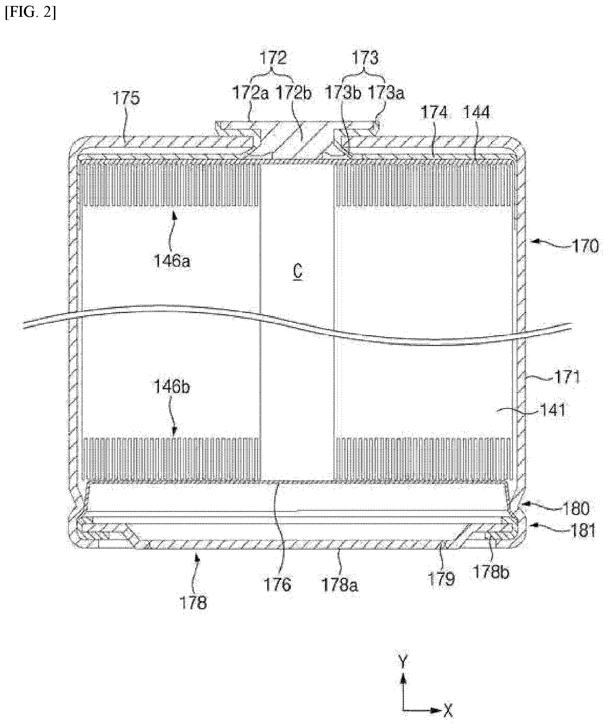

FIG. 2 shows a cross-sectional view of the cylindrical battery with the tap-less structure according to another embodiment of the present invention. Hereinafter, a cylindrical battery according to another embodiment of the present invention will be described with reference to FIG. 2. However, FIG. 2 illustrates only one embodiment of the present invention, and the structure of the cylindrical battery according to the present invention is not limited to the range disclosed in FIG. 2.

Referring to FIG. 2, as compared to the cylindrical battery 140 shown in FIG. 1, the cylindrical battery 170 according to another embodiment of the present invention has different structures of the battery can and the sealing body, but has substantially the same configuration of the electrode assembly and the electrolyte.

Specifically, the cylindrical battery 170 includes a battery can 171 through which a rivet terminal 172 is penetrated and installed. The rivet terminal 172 is installed on a partially closed surface (upper surface in the drawing) of one end of the battery can 171. The rivet terminal 172 is riveted to the through hole (first opening of the first end) of the battery can 171 in a state in which the insulating second gasket 173 is interposed. The rivet terminal 172 is exposed to the outside in a direction opposite to the direction of gravity.

The rivet terminal 172 includes a terminal exposure portion 172a and a terminal insertion portion 172b. The terminal exposure portion 172a is exposed to the outside of the closed surface of the battery can 171. The terminal exposure portion 172a may be located approximately in the center of the partially closed surface of the battery can 171. The maximum diameter of the terminal exposure portion 172a may be formed larger than the maximum diameter of the through hole formed in the battery can 171. The terminal insertion portion 172b may penetrate approximately the center of the closed surface of the battery can 171 to be electrically connected to the non-coated portion 146a of the positive electrode plate. The terminal insertion portion 172b may be riveted to the inner surface of the battery can 171. That is, the end of the terminal insertion portion 172b may have a shape bent toward the inner surface of the battery can 171. The maximum diameter of the end of the terminal insertion portion 172b may be greater than the maximum diameter of the through hole of the battery can 171.

The bottom surface of the terminal insertion portion 172b may be welded to the first current collecting plate 144 connected to the non-coated portion 146a of the positive electrode plate. An insulating cap 174 made of an insulating material may be interposed between the first current collecting plate 144 and the inner surface of the battery can 171. The insulating cap 174 covers the upper portion of the first current collecting plate 144 and the top edge portion of the electrode assembly 141. Thus, it is possible to prevent the outer circumferential non-coated portion B3 of the electrode assembly 141 from contacting the inner surface of the battery can 171 having a different polarity and thus causing a short circuit. The terminal insertion portion 172b of the rivet terminal 172 may pass through the insulating cap 174 and be welded to the first current collecting plate 144.

The second gasket 173 is interposed between the battery can 171 and the rivet terminal 172 to prevent the battery can 171 and the rivet terminal 172, which have opposite polarities, from being in electrical contact with each other. Thus, the upper surface of the battery can 171 having an approximately flat shape can function as a positive electrode terminal of the cylindrical battery 170.

The second gasket 173 includes a gasket exposure portion 173a and a gasket insertion portion 173b. The gasket exposure portion 173a is interposed between the terminal exposure portion 172a of the rivet terminal 172 and the battery can 171. The gasket insertion portion 173b is interposed between the terminal insertion portion 172b of the rivet terminal 172 and the battery can 171. The gasket insertion portion 173b may be deformed together during riveting of the terminal insertion portion 172b and come into close contact with the inner surface of the battery can 171. The second gasket 173 may be made of, for example, a polymer resin having insulating properties.

The gasket exposure portion 173a of the second gasket 173 may have a shape extending to cover the outer peripheral surface of the terminal exposure portion 172a of the rivet terminal 172. When the second gasket 173 covers the outer peripheral surface of the rivet terminal 172, it is possible to prevent a short circuit from occurring in a process of coupling an electrical connection component such as a bus bar to the upper surface of the battery can 171 and/or the rivet terminal 172. Although not illustrated in the drawing, the gasket exposure portion 173a may have a shape extending to cover not only the outer peripheral surface of the terminal exposure portion 172a but also a part of the upper surface thereof.

When the second gasket 173 is made of a polymer resin, the second gasket 173 may be coupled to the battery can 171 and the rivet terminal 172 by thermal fusion. In this case, airtightness can be enhanced at a coupling interface between the second gasket 173 and the rivet terminal 172 and a coupling interface between the second gasket 173 and the battery can 171. Meanwhile, when the gasket exposure portion 173a of the second gasket 173 has a shape extending to the upper surface of the terminal exposure portion 172a, the rivet terminal 172 can be integrally coupled to the second gasket 173 by insert injection.

The remaining region 175 of the upper surface of the battery can 171, excluding a region occupied by the rivet terminal 172 and the second gasket 173, corresponds to a negative electrode terminal having a polarity opposite to that of the rivet terminal 172.

The second current collecting plate 176 is coupled to the lower portion of the electrode assembly 141. The second current collecting plate 176 is made of a conductive metal material such as aluminum, steel, copper, nickel, etc., and is electrically connected to the non-coated portion 146b of the negative electrode plate.

Preferably, the second current collecting plate 176 is electrically connected to the battery can 171. To this end, at least a part of the edge portion of the second current collecting plate 176 may be interposed and fixed between the inner surface of the battery can 171 and the first gasket 178b. In one example, at least a part of the edge portion of the second current collecting plate 176 may be fixed to the beading part 180 by welding while being supported on the bottom surface of the beading part 180 formed at the bottom of the battery can 171. In a modified example, at least a part of the edge portion of the second current collecting plate 176 may be directly welded to the inner wall surface of the battery can 171.

The second current collecting plate 176 may include a plurality of irregularities (not shown) radially formed on a surface facing the non-coated portion 146b. When the irregularities are formed, the irregularities may be press-fitted into the non-coated portion 146b by pressing the second current collecting plate 176.

Preferably, the ends of the second current collecting plate 176 and the non-coated portion 146b may be coupled to each other by welding, for example, laser welding.

The sealing body 178 sealing the lower open end of the battery can 171 includes a cap plate 178a and a first gasket 178b. The first gasket 178b electrically separates the cap plate 178a from the battery can 171. The crimping part 181 fixes the edge of the cap plate 178a and the first gasket 178b together. The cap plate 178a includes a vent part 179. The configuration of the vent part 179 is substantially the same as in the above-described embodiment.

Preferably, the cap plate 178a is made of a conductive metal material. However, since the first gasket 178b is interposed between the cap plate 178a and the battery can 171, the cap plate 178a does not have electrical polarity. The sealing body 178 functions to seal the open end of the lower portion of the battery can 171 and discharge gas when the internal pressure of the battery cell 170 increases to a threshold value or more.

Preferably, the rivet terminal 172 electrically connected to the non-coated portion 146a of the positive electrode plate is used as a positive electrode terminal. In addition, the portion 175, excluding the rivet terminal 172, of the upper surface of the battery can 171 electrically connected to the non-coated portion 146b of the negative electrode plate through the second current collecting plate 176 is used as a negative electrode terminal. As described above, when two electrode terminals are positioned on the upper portion of the cylindrical battery, it is possible to arrange electrical connection parts such as bus bars only on one side of the cylindrical battery 170.

This can lead to simplification of the battery pack structure and improvement of energy density. In addition, since the portion 175 used as the negative electrode terminal has a substantially flat shape, a sufficient bonding area can be secured for bonding electrical connection parts such as bus bars. Accordingly, the cylindrical battery 170 can reduce the resistance at the junction of the electrical connection parts to a desirable level.

When a cylindrical lithium secondary battery is formed with the tap-less structure as described above, the current concentration is less compared to the conventional battery with electrode tabs, whereby heat generation inside the battery can be effectively reduced, and thus the thermal safety of the battery can be improved.

Hereinafter, the present invention will be described in more detail by way of specific examples.

### EXAMPLES

### Example 1

A non-aqueous solvent was prepared by dissolving LiPF₆ in an organic solvent (ethylene carbonate (EC):ethyl methyl carbonate (EMC):dimethyl carbonate (DMC) = 20:5:75 volume ratio) to be 1.3M. 2% by weight of vinylene carbonate (VC), 1% by weight of 1,3-propane sultone (PS), 0.2% by weight of succinonitrile, 0.3% by weight of propargyl-1H-imidazole-1-carboxylate, and 0.2% by weight of LiPO₂F₂, based on the total weight of the electrolyte, were added to prepare an electrolyte. The viscosity of the prepared electrolyte at 20°C was 4.1 cP.

A positive electrode slurry was prepared by mixing a positive electrode active material of Li[Ni_{0.9}Co_{0.06}Mn_{0.03}Al_{0.01}]O₂, a carbon nanotube, and a PVDF binder at a weight ratio of 97.8:0.6:1.6 in N-methyl pyrrolidone, wherein the positive electrode active material has a unimodal particle size distribution with D₅₀ of 3 µm, and is in the form of a single particle. The positive electrode slurry was applied to one surface of an aluminum current collector sheet, dried at 120°C, and rolled to prepare a positive electrode plate.

A negative electrode active material (graphite: SiO=95:5 weight ratio mixture), a conductive material (super C), styrene-butadiene rubber (SBR), and carboxymethyl cellulose (CMC) were mixed in water at a weight ratio of 96:2:1.5:0.5 to prepare a negative electrode slurry. The negative electrode slurry was applied to one surface of a copper current collector sheet, dried at 150°C, and rolled to prepare a negative electrode plate.

A separator was interposed between the positive electrode plate and the negative electrode plate prepared as described above, which were stacked in the order of separator/positive electrode plate/separator/negative electrode plate, and then wound to prepare a jelly-roll type electrode assembly. The electrode assembly prepared as described above was inserted into a cylindrical battery can. Thereafter, a 4680 cell was manufactured by injecting the electrolyte so that the volume occupied by the electrolyte was 101% by volume based on the total pore volume of the positive electrode plate, negative electrode plate, and separator.

### Example 2

A 4680 cell was manufactured in the same manner as in Example 1, except that the electrolyte was injected so that the volume occupied by the electrolyte was 116% by volume based on the total pore volume of the positive electrode plate, negative electrode plate, and separator.

### Example 3

A non-aqueous solvent was prepared by dissolving LiPF₆ in an organic solvent (ethylene carbonate (EC):ethyl methyl carbonate (EMC):dimethyl carbonate (DMC) = 20:5:75 volume ratio) to be 1.2M. 2% by weight of vinylene carbonate (VC), 1% by weight of 1,3-propane sultone (PS), 0.2% by weight of succinonitrile, 0.3% by weight of propargyl-1H-imidazole-1-carboxylate, and 0.2% by weight of LiPO₂F₂, based on the total weight of the electrolyte, were added to prepare an electrolyte. The viscosity of the prepared electrolyte at 20°C was 3.5 cP.

A 4680 cell was manufactured in the same manner as in Example 1, except that the above electrolyte was injected.

### Comparative Example 1

A 4680 cell was manufactured in the same manner as in Example 1, except that the electrolyte was injected so that the volume occupied by the electrolyte was 100% by volume based on the total pore volume of the positive electrode plate, negative electrode plate, and separator.

### Comparative Example 2

A 4680 cell was manufactured in the same manner as in Example 1, except that the electrolyte was injected so that the volume occupied by the electrolyte was 120% by volume based on the total pore volume of the positive electrode plate, negative electrode plate, and separator.

### Experimental Example - Evaluation of Low Temperature Lifespan Characteristics

Low-temperature lifespan characteristics were evaluated for the 4680 cells of Examples 1 to 3 and Comparative Examples 1 and 2.

Specifically, for each of the 4680 cells of Examples 1 to 3 and Comparative Examples 1 and 2, 150 cycles of charging and discharging were performed in which one cycle consists of charging up to 4.2V at a constant current of 0.5C at 20°C and discharging up to 2.5V at a constant current of 0.5C, and then the capacity retention rate compared to the initial capacity after 150 cycles was measured. The results are shown in Table 1 below.

**[Table 1]**

| | Capacity retention rate (%) |
|---|---|
| Example 1 | 91 |
| Example 2 | 85 |
| Example 3 | 84 |
| Comparative Example 1 | 70 |
| Comparative Example 2 | 50 |

As shown in Table 1 above, it was confirmed that, in the case of the lithium secondary batteries in which injection fraction was adjusted so that the volume occupied by the electrolyte was 101% by volume or more and 119% or less based on the total pore volume of the positive electrode plate, the negative electrode plate, and the separator as in Examples 1 to 3, the low-temperature lifespan characteristics were excellent compared to the lithium secondary batteries of Comparative Examples 1 and 2 in which the injection was performed so as to be out of the above range.

## Claims

1. A lithium secondary battery including: an electrode assembly in which a positive electrode plate, a negative electrode plate, and a separator interposed between the positive electrode plate and the negative electrode plate are wound in one direction; a battery can accommodating the electrode assembly; an electrolyte injected into the battery can; and a sealing body sealing an open end of the battery can,
wherein each of the positive electrode plate and the negative electrode plate includes a non-coated portion in which an active material layer is not formed, and at least a part of the non-coated portion of the positive electrode plate or the negative electrode plate defines an electrode tab, and
wherein a volume occupied by the electrolyte is 101% by volume or more and 119% or less based on the total pore volume of the positive electrode plate, the negative electrode plate, and the separator.

2. The lithium secondary battery according to claim 1, wherein the volume occupied by the electrolyte is 101% by volume or more and 115% or less based on the total pore volume of the positive electrode plate, the negative electrode plate, and the separator.

3. The lithium secondary battery according to claim 1, wherein the lithium secondary battery has a capacity of 25 Ah or more.

4. The lithium secondary battery according to claim 1, wherein the lithium secondary battery is a cylindrical battery having a form factor ratio of 0.4 or more.

5. The lithium secondary battery according to claim 1, wherein the positive electrode plate includes a positive electrode active material layer containing a positive electrode active material,
the positive electrode active material is a lithium nickel-based oxide represented by the following Chemical Formula 1:
[Chemical Formula 1] LiₐNi_{b}Co_{c}M¹_{d}M²eO₂
wherein M¹ is Mn, Al, or a combination thereof, M² is at least one selected from the group consisting of Zr, W, Y, Ba, Ca, Ti, Mg, Ta, and Nb, and 0.8≤a≤1.2, 0.8≤b<1, 0<c<0.2, 0<d<0.2, 0≤e≤0.1.

6. The lithium secondary battery according to claim 1, wherein the negative electrode plate includes a negative electrode active material layer containing a negative electrode active material,
the negative electrode active material included in the negative electrode active material layer is formed of a mixture of a silicon-based negative electrode active material and a carbon-based negative electrode active material.

7. The lithium secondary battery according to claim 6, wherein the silicon-based negative electrode active material is SiOy(0<y<2), and the SiOy(0<y<2) is included in an amount of 1 to 5 wt% based on the total weight of the negative electrode active material.

8. The lithium secondary battery according to claim 1, wherein the viscosity of the electrolyte at 20°C is 3.5 cP or more and 4.2 cP or less.

9. The lithium secondary battery according to claim 1, wherein the electrolyte includes a lithium salt, and the concentration of the lithium salt is 1.0M to 1.5M.

10. The lithium secondary battery according to claim 1, wherein the electrolyte includes an organic solvent, wherein the organic solvent includes ethylene carbonate (EC) and ethyl methyl carbonate (EMC).

11. The lithium secondary battery according to claim 10, wherein the organic solvent includes ethylene carbonate (EC) and ethyl methyl carbonate (EMC) in a volume ratio of 1:0.25 to 1:1.15.

12. The lithium secondary battery according to claim 10, wherein the organic solvent further includes dimethyl carbonate (DMC).

13. The lithium secondary battery according to claim 10, wherein the organic solvent includes ethylene carbonate (EC) and ethyl methyl carbonate (EMC) in an amount of 25 vol% or less based on the total volume of the organic solvent.

14. The lithium secondary battery according to claim 1, wherein the electrolyte includes vinylene carbonate in an amount of 0.1 to 3 wt% based on the total weight of the electrolyte.

15. The lithium secondary battery according to claim 1, wherein the electrolyte includes 1,3-propane sultone in an amount of 0.1 to 2 wt% based on the total weight of the electrolyte.

16. The lithium secondary battery according to claim 1, wherein the electrolyte includes lithium difluorophosphate (LiPO₂F₂) in an amount of 0.01 to 1 wt% based on the total weight of the electrolyte.
